# EUROPÄISCHE PATENTSCHRIFT

(11) **EP 0 910 034 B1**
(45) Veröffentlichungstag und Bekanntmachung des Hinweises auf die Patenterteilung: **06.09.2006**
(21) Anmeldenummer: 98118607.5
(22) Anmeldetag: 01.10.1998
(51) Int. Cl.: G06K 7/10, G06K 19/07

(54) **Transponder**
Transponder
Transpondeur

(30) Priorität: 14.10.1997 DE 19745310
(43) Veröffentlichungstag der Anmeldung: 21.04.1999
(73) Patentinhaber: ATMEL Germany GmbH, 74072 Heilbronn (DE)
(72) Erfinder: Ziegler, Werner, 74072 Heibronn (DE)

(56) Entgegenhaltungen:
- DE-C- 4 434 240
- DE-C- 19 601 511
- FR-A- 2 657 479
- GB-A- 2 307 379
- US-A- 5 260 701

## Beschreibung

Die vorliegende Erfindung betrifft ein Modulationsverfahren sowie eine Anordnung zur Datenübertragung von einem Transponder zu einem Schreib-Lese-Gerät, wobei der Transponder von dem Schreib-Lese-Gerät über ein Wechselfeld mit Energie versorgt wird, und die Datenübertragung bidirektional durch Modulation des energieübertragenden Wechselfeldes erfolgt. Ein Transpondersystem aus einem Schreib-Lese-Gerät und mindestens einem Transponder ist beispielsweise in der Druckschrift DE 42 42 112 A1 beschrieben.

Aus der Druckschrift US A 5 260 701 ist ein Transponder bekannt, bei dem über einen Schalter der Antennenkreis des Transponders mit den stromverbrauchenden Elementen, die in Form eines Lastwiderstandes dargestellt sind, verbunden ist. Im Transponder wird ein Modulationshub durch eine Betätigung des Schalters erzeugt.

Zur Energeiübertragung vom Schreib-Lese-Gerät zu einem Transponder wird im Schreib-Lese-Gerät ein Antennenschwingkreis mit einer hochfrequenten Wechselspannung versorgt. In der Spule des Antenneschwingkreises entsteht dadurch ein elektromagnetisches Wechselfeld, das sich im Raum um das Schreib-Lese-Gerät ausbreitet.
Dieses energieübertragende, elektromagnetische Wechselfeld induziert in einem Antennenkreis des Transponders eine Wechselspannung, die im folgenden als Antennenspannung bezeichnet wird. Der Antennenkreis des Transponders, der primär aus einer Transponderspule und einem parallel geschalteten Kondensator besteht, ist so ausgelegt, dass er in Resonanz zur Frequenz des Antennenschwingkreises betrieben wird.
Die Antennenspannung wird mittels einer Gleichrichterstufe gleichgerichtet und steht als Versorgungsspannung den Transponderschaltkreisen, üblicherweise ein Datenspeicher und eine Steuereinheit, zur Verfügung. Ein Transpondersystem stellt einen lose gekoppelten Transformator dar, der aufgrund des geringen Kopplungsfaktors nur sehr wenig Energie übertragen kann. Der Kopplungsfaktor, und damit die im Transponder zur Verfügung stehende Versorgungsspannung, ist vom Abstand der Spule des Antennenschwingkreises des Schreibe-Lese-Gerätes zur Spule des Antennenkreises des Transponders abhängig.
Bei geringen Abständen zum Schreibe-Lese-Gerät kann ein Transponder soviel Energie empfangen, daß die Transponderschaltkreise mittels einer schutzschaltung vor zu hohen Versorgungsspannungen geschützt werden müssen. Eine derartige Schutzschaltung kann beispielsweise mit einer gegen das Bezugspotential geschalteten Zenerdiode realisiert werden.

Die Datenübertragung vom Schreibe-Lese-Gerät zum Transponder erfolgt durch kurzzeitiges, datenabhängiges Abschalten des energieübertragenden Wechselfeldes, wodurch datenabhängige Feldlücken im energieübertragenden Wechselfeld entstehen, die im Transponder datenabhängige Schwankungen der Antennenspannung und der versorgungsspannung zur Folge haben. Ein parallel zu den Transponderschaltkreisen angeordneter weiterer Kondensator gewährleistet, daß die Versorgungsspannung während der Feldlücken im energieübertragenden Wechselfeld nicht unter die von den Transponderschaltkreisen minimal benötigte Betriebsspannung fällt. Zudem wird durch den weiteren Kondensator die Versorgungsspannung für die Transponderschaltkreise geglättet.

Die Datenübertragung vom Transponder zum Schreibe-Lese-Gerät erfolgt durch datenabhängige Modulation des energieübertragenden Wechselfeldes. Dazu wird die Antennenspannung bzw. die Versorgungsspannung des Transponders mittels eines Modulators bedämpft, der den im Transponder fließenden Strom durch das Zuschalten einer Last erhöht. Der Modulator besteht aus einer geschalteten Last, die parallel zum Antennenkreis des Transponders angeordnet ist. Beispielsweise kann die Last als ein gegen das Bezugspotential geschalteter, steuerbarer Schalter ausgebildet sein.
Bei geöffnetem Schalter des Modulators, d.h. im ungedämpften Zustand, wird die Antennenspannung nur durch die Ströme der Transponderschaltkreise, der Schutzschaltung und des weiteren Kondensators belastet.
Bei geschlossenem Schalter, d.h. im gedämpften Zustand, fließt ein weiterer Strom durch den Modulator, wodurch der Antennenkreis stark belastet wird und die Antennenspannung deutlich absinkt. Die Differenz der Antennenspannung im gedämpften und im ungedämpften Zustand wird als Modulationsspannungshub bezeichnet. solange ein Transponder seinen typischen Modulationsspannungshub erreicht, kann die Datenübertragung vom Transponder zum Schreibe-Lese-Gerät erfolgen.

Dabei darf der Modulator den Antennenkreis jedoch nur soweit belasten, daß die Versorgungsspannung den Wert der minimal notwendigen Betriebsspannung der Transponderschaltkreise nicht unterschreitet. Deshalb wird das Absinken der Antennenspannung auf einen Minimalwert begrenzt. Daraus folgt, daß der durch den Modulator bewirkte Modulationsspannungshub von der Differenz zwischen der Antennenspannung und der minimal notwendigen Betriebsspannung der Transponderschaltkreise abhängig ist.

Der wesentliche Nachteil derartig aufgebauter Transponder ist, daß bei Abständen des Transponders zum Schreibe-Lese-Gerät, bei denen die Versorgungsspannung gerade noch zum Betrieb der Transponderschaltkreise ausreicht, der durch den Modulator erzielbare Modulationsspannungshub nicht mehr zur Datenübertragung vom Transponder zum Schreibe-Lese-Gerät ausreicht.

Der Erfindung liegt die Aufgabe zugunde, einen Transponder zur Datenübertragung zu einem Schreibe-Lese-Gerät anzugeben, der diesen Nachteil vermeidet.

Diese Aufgabe wird erfindungsgemäß durch das Merkmal im Kennzeichen des Patentanspruchs 1 gelöst. Bei dem erfindungsgemäBen Transponder wird der mit einem Modulator erzeugte Modulationsspannungshub dadurch bewirkt, daß der im Transponder fließende Transponderstrom reduziert wird.

Der Modulator wird durch eine einen Spannungsabfall erzeugenden und den Transponderstrom reduzierende Schaltung gebildet. Beispielsweise kann diese Schaltung durch einen Modulatorwiderstand gebildet werden, der durch einen parallel geschalteten, steuerbaren Schalter überbrückt werden kann.
Der Modulationsspannungshub des Transponders wird dabei durch das Überbrükken des Modulatorwiderstandes bewirkt. Dabei wird im Transponder keine Last zugeschaltet, sondern die Last für den Antennenkreis wird reduziert. Dabei wird der im Transponder fließende Transponderstrom vermindert, der Antennenkreis wird weniger belastet und die Antennenspannung steigt an.

So wird die Energie, die bei der Datenübertragung vom Transponder zum Schreibe-Lese-Gerät zum Bedämpfen des energieübertragenden Wechselfeld dem Antennenkreis entzogen werden muß, nicht in der zusätzlichen Last vernichtet, sondern die Energie wird im weiteren Kondensator gespeichert und kann den Transponderschaltkreisen bei Bedarf zur Verfügung gestellt werden.

Der Transponder besteht aus einem Antennenkreis, der eine Transponderspule mit einem parallel geschalteten Kondensator aufweist, einem Gleichrichter, einem Modulator, einer Klemm - und Schutzschaltung, einem weiteren Kondensator sowie den Transponderschaltkreisen. Der Modulator ist dabei in Serie zwischen dem Antennenkreis und den Transponderschaltkreisen angeordnet. Der Gleichrichter wird in Serie vor oder nach dem Modulator angeordnet. Die Klemm - und Schutzschaltung sowie der weitere Kondensator sind zueinander parallel zwischen dem Modulator und den Transponderschaltkreisen angeordnet.
Die Transponderschaltkreise bestehen aus einem Demodulator, einem Datenspeicher und einer Steuereinheit, die parallel zueinander angeordnet sind

Dies bewirkt, daß bei Abständen zwischen dem Transponder und dem Schreibe-Lese-Gerät, bei denen die Transponderschaltkreise gerade noch ausreichend mit Energie versorgt werden, die Datenübertragung vom Transponder zum Schreibe-Lese-Gerät gewährleistet wird. Dabei wird der Abstand, bei dem die Datenübertragung noch erfolgen kann, vergrößert.
Insbesondere eignet sich das erfindungsgemäße Modulationsverfahren für Transponder mit Transponderschaltkreisen, deren Leistungsaufnahme nicht vernachlässigt werden kann.
Die Transponderschaltkreise werden zumindest von einem Demodulator, einem Datenspeicher sowie einer Steuereinheit gebildet, die parallel zueinander und parallel zum Antennenkreis angeordnet sind.

Im folgenden ist der Transponder Datenübertragung zu einem Schreibe-Lese-Gerät anhand von zwei Figuren dargestellt und erläutert.

Es zeigen:
- Figur 1: ein Prinzipschaltbild eines Transponders, mit den notwendigen Baugruppen,
- Figur 2: ein Diagramm zur schematische Darstellung der in einem Transponder fließenden Spannungen bei geringem und bei dem maximal möglichen Abstand zwischen dem Transponder und einem Schreibe-Lese-Gerät.

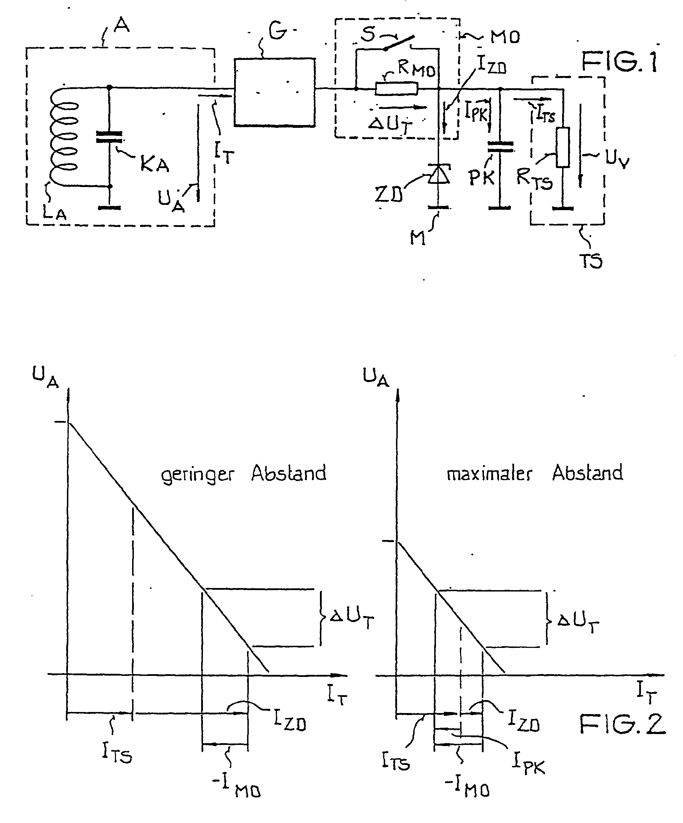

In der Figur 1 ist das Prinzipschaltbild eines Transponders dargestellt. Der Antennenkreis A des Transponders wird von einer Transponderspule L_{A} und einem parallel geschaltetem Kondensator K_{A} gebildet. Parallel zum Antennenkreis A sind eine Klemm - und Schutzschaltung, ein weiterer Kondensator sowie die Transponderschaltkreise TS angeordnet. Die Klemm - und Schutzschaltung wird von einer Zenerdiode ZD gebildet, die eine Durchbruchspannung von 3 Volt aufweist. Der weitere Kondensator wird im folgenden als Pufferkondensator PK bezeichnet. Zwischen dem Antennenkreis A und der Zenerdiode ZD sind in Serie ein Gleichrichter G und ein Modulator MO angeordnet.

Die Energieversorgung des Transponders erfolgt durch ein energieübertragendes Wechselfeld eines Schreibe-Lese-Gerätes. Die Transponderspule L_{A} des Antennenkreises A ist dabei so ausgelegt, daß sie in Resonanz zur Frequenz des energieübertragenden Wechselfeldes des Schreibe-Lese-Gerätes betrieben wird. Der Antennenkreis A des Transponders kann dabei wie eine Wechselspannungsquelle mit einem Innenwiderstand betrachtet werden.
Durch den Gleichrichter G wird die Antennenspannung U_{A} des Antennenkreises A gleichgerichtet und steht nach dem Modulator MO als Versorgungsspannung Uᵥ den Transponderschaltkreisen TS zur Verfügung. Die Transponderschaltkreise TS, die aus einem Demodulator, einer steuereinheit und einer Speichereinheit bestehen, sind in der Abbildung schematisch durch ihren Schaltungswiderstand R_{TS} dargestellt.
In Serie zu dem Gleichrichter G ist der Modulator MO geschaltet. Der Modulator MO wird durch eine Schaltung gebildet, die einen Spannungsabfall erzeugt und den im Transponder fließenden Transponderstrom I_{T} reduziert. In diesem Ausführungsbeispiel wird die Schaltung durch einen Modulatorwiderstand RM mit einem parallel geschalteten, steuerbaren Schalter S gebildet.

Da das Schreibe-Lese-Gerät und der Transponder einen lose gekoppelten Transformator darstellen, dessen Kopplungsfaktor vom Abstand des Schreibe-Lese-Gerätes und des Transponders abhängig ist, ist auch die Antennenspannung U_{A} des Transponders von diesem Abstand abhängig. Die minimale zum Betrieb der Transponderschaltkreise TS notwendige Betriebsspannung U_{Smin} beträgt 1,8 Volt. Die maximale für den Betrieb der Transponderschaltkreise TS noch zulässige Betriebsspannung U_{Smax} beträgt 6,5 Volt.
Bei geringen Abständen zwischen dem Schreibe-Lese-Gerät und dem Transponder kann die Antennenspannung U_{A} auf über 100 Volt ansteigen. Derartige für die Transponderschaltkreise TS schädlichen Überspannung werden von der Zenerdiode ZD an das Bezugspotential M abgeführt. Die maximal zulässige Betriebsspannung U_{Smax} der Transponderschaltkreise beträgt 6,5 Volt. Um zu gewährleisten, daß der Modulator MO den Modulationsspannungshub ΔU_{T} überhaupt erzeugen kann, wird eine Zenerdiode ZD mit einer Durchbruchsspannung von 3 Volt gewählt. Bei Versorgungsspannung U_{V} oberhalb von 3 Volt bricht die Zenerdiode ZD durch und es fließt ein Schutzstrom I_{ZD} durch die Zenerdiode ZD an des Bezugspotential M. Zusätzlich zu dem Schutzstrom I_{ZD} der Zenerdiode ZD kann ein speicherstrom I_{PK} in den parallel zur Zenerdiode ZD angeordneten Pufferkondensator PK fließen.

Die Datenübertragung vom Schreibe-Lese-Gerät zum Transponder erfolgt durch datenabhängige Unterbrechungen des energieübertragenden Wechselfeldes des Schreibe-Lese-Gerätes. Während diesen Unterbrechungen wird die Spannungsversorgung der Transponderschaltkreise TS durch den Pufferkondensator PK gewährleistet, so daß der Abstand, bei dem eine sichere Datenübertragung vom Transponder zum Schreibe-Lese-Gerät gewährleistet wird, gesteigert werden kann. Zudem werden für die Transponderschaltkreise TS störende Schwankungen der Versorgungsspannung U_{V} durch den Pufferkondensator PK geglättet. Der Pufferkondensator PK ermöglicht beispielsweise auch den Betrieb von Transponderschaltkreisen TS, die einen nicht zu vernachlässigenden Strombedarf aufweisen.

Zur Datenübertragung vom Transponder zum Schreibe-Lese-Gerät wird der Schalter S des Modulators MO von einer Steuereinheit der Transponderschaltkreise TS datenabhängig angesteuert.
Bei geschlossenem Schalter S wird der Antennenkreis A durch den Nutzstrom I_{TS} der Transponderschaltkreise TS, den Schutzstrom l_{ZD} der Zenerdiode ZD und gegebenenfalls durch den Speicherstrom I_{PK} des Pufferkondensators PK belastet. Die Höhe der Versorgungsspannung U_{V} ist durch die Zenerdiode ZD festgelegt. Bei geöffnetem Schalter S wird der Antennenkreises A durch den Modulatorwiderstand RM um den Modulatorstrom I_{MO} entlastet, wobei die Antennenspannung U_{A} ansteigt. Dieser Anstieg der Antennenspannung U_{A} stellt den Modulationsspannungshub ΔU_{T} des Transponders dar, der zu Unterschieden in der Bedämpfung des energieübertragenden Wechselfeldes des Schreibe-Lese-Gerätes führt. Diese Unterschiede in der Bedämpfung führen im Antennenschwingkreis des schreibe-Lese-Gerätes zu geringen spannungsänderungen, die von einem Empfangsschaltkreis im Schreibe-Lese-Gerät ausgewertet werden.

In der Figur 2 sind die durch das Modulationsverfahren bedingten Spannungsverhältnisse jeweils für einen geringen Abstand und für den maximalen Abstand des Transponders vom Schreibe-Lese-Gerät dargestellt. Bei dem maximalen Abstand des Transponder vom Schreibe-Lese-Gerät reicht die Antennenspannung U_{A} gerade noch für den sicheren Betrieb der Transponderschaltkreise TS aus. Dabei ist jeweils die Antennenspannung U_{A} über dem im Transponder fließenden Transponderstrom I_{T} aufgetragen.
Bei geringen Abständen des Transponders vom Schreibe-Lese-Gerät wird zur Erzeugung des Modulationsspannungshubes ΔU_{T} der Transponderstrom I_{T} durch das Öffnen des Schalters S um den Modulatorstrom I_{MO} des Modulators MO reduziert, wodurch sich die Antennenspannung U_{A} um den Modulationsspannungshub ΔU_{T} erhöht. Dabei reduziert sich lediglich der Schutzstrom I_{ZD} durch die Zenerdiode ZD. Solange der Antennenkreis A einen so hohen Transponderstrom I_{T} liefert, daß ein Schutzstrom I_{ZD} durch die Zenerdiode ZD fließt, steht der von den Transponderschaltkreisen TS benötigt Nutzstrom I_{TS} zur Verfügung.
Beim maximalen Abstand des Transponders vom Schreibe-Lese-Gerät wird zur Erzeugung des Modulationsspannungshubes ΔU_{T} der Transponderstrom I_{T} ebenfalls durch das öffnen des Schalters S um den Modulatorstrom I_{MO} des Modulators MO reduziert, wodurch sich ebenfalls die Antennenspannung U_{A} um den Modulationsspannungshub ΔU_{T} erhöht. Bei Bedarf fließt ein Speicherstrom I_{PK} aus dem Pufferkondensator PK und trägt zur Versorgung der Transponderschaltkreise TS bei, wobei sich der Nutzstrom I_{TS} für die Transponderschaltkreise aus dem Modulatorstrom I_{MO} und dem Speicherstrom I_{PK} des Pufferkondensators PK zusammensetzt.

Wird durch das Schließen des Schalters S des Modulators MO die Antennenspannung U_{A} abgesenkt, steht ein höherer Transponderstrom I_{T} zur Verfügung, und der Kondensator PK wird wieder geladen.

Das Modulationsverfahren ermöglicht so einen hohen Modulationsspannungshub ΔU_{T}, auch wenn die Antennenspannung U_{A} nur knapp über der minimalen Betriebsspannung U_{Smin} der Transponderschaltkreise TS von 1,8 Volt liegt.
Solange der Antennenkreis A im Mittel ausreichend Energie aus dem energieübertragenden Wechselfeld entnehmen kann, um die Transponderschaltkreise TS mit der minimal notwendigen Betriebsspannung U_{Smin} zu versorgen, kann ein Transponder, der erfindungsgemäß arbeitet, durch die Verringerung der Belastung des Antennenkreises A den typischen Modulationsspannungshub ΔU_{T} erreichen.

## Patentansprüche

1. Transponder zur Datenübertragung von Daten zu einem Schreib-/Lesegerät, mit einem Antennenkreis (A), einem Gleichrichter (G), einem weiteren Kondensator (PK) und Transponder-Schaltkreisen (TS), sowie einem Modulator (MO), **dadurch gekennzeichnet, dass** der
Modulator (MO), einen Modulatorwiderstand (RM) und einen parallel dazu angeordneten steuerbaren Schalter (S) aufweist und der einen Modulationshub (ΔU_{T}) durch einen Spannungsabfall im Modulator (MO) erzeugt, der eine Reduzierung des im Transponder fließenden Transponderstromes (I_{T}) bewirkt.

2. Transponder nach Anspruch 1,
**dadurch gekennzeichnet,**
**dass** eine Klemm- und Schutzschaltung (ZD) vorgesehen ist, die zwischen dem Modulator (MO) und dem weiteren Kondensator (PK) angeordnet ist.

3. Transponder nach Anspruch 2,
**dadurch gekennzeichnet,**
**dass** die Klemm- und Schutzschaltung (ZD), der weitere Kondensator (PK) und die Transponder-Schaltkreise (TS) parallel zueinander angeordnet sind.

4. Transponder nach einem der vorstehenden Ansprüche,
**dadurch gekennzeichnet,**
**dass** der Gleichrichter (G) und der Modulator (MO) in Serie zueinander und zwischen dem Antennenkreis (A) und den Transponder-Schaltkreisen (TS) angeordnet sind, wobei der Gleichrichter (G) vor oder nach dem Modulator (MO) angeordnet ist.

5. Transponder nach einem der vorstehenden Ansprüche,
**dadurch gekennzeichnet,**
**dass** der Antennenkreis (A) eine Transponderspule (L_{A}) und einen parallel geschalteten Kondensator (K_{A}) aufweist.

6. Transponder nach einem der vorstehenden Ansprüche,
**dadurch gekennzeichnet,**
**dass** die Klemm - und Schutzschaltung (ZD) eine Zenerdiode aufweist.

7. Transponder nach einem der vorstehenden Ansprüche,
**dadurch gekennzeichnet,**
**dass** die Transponderschaltkreise (TS), die aus einem Demodulator, einem Datenspeicher und einer Steuereinheit bestehen, parallel zueinander und parallel zum Antennenkreis (A) geschaltet sind.

## Claims

1. Transponder for data transmission of data to a write/read apparatus, with an antenna circuit (A), a rectifier (G), a further capacitor (PK) and transponder switching circuits (TS) as well as a modulator (MO), **characterised in that** the modulator (MO) comprises a modulator resistance (RM) and a controllable switch (S) arranged parallel thereto and produces a modulator stroke (ΔU_{T}) by a voltage drop in the modulator (MO), which effects a reduction in the transponder current (I_{T}) flowing in the transponder.

2. Transponder according to claim 1, **characterised in that** a clamping and protective circuit (ZD) is provided, which is arranged between the modulator (MO) and the further capacitor (PK).

3. Transponder according to claim 2, **characterised in that** the clamping and protective circuit (ZD), the further capacitor (PK) and the transponder switching circuits (TS) are arranged parallel to one another.

4. Transponder according to one of the preceding claims, **characterised in that** the rectifier (G) and the modulator (MO) are arranged in series with respect to one another and between the antenna circuit (A) and the transponder switching circuits (TS), wherein the rectifier (G) is arranged in front of or behind the modulator (MO).

5. Transponder according to one of the preceding claims, **characterised in that** the antenna circuit (A) has a transponder coil (L_{A}) and a capacitor (K_{A}) connected in parallel therewith.

6. Transponder according to one of the preceding claims, **characterised in that** the clamping and protective circuit (ZD) comprises a Zener diode.

7. Transponder according to one of the preceding claims, **characterised in that** the transponder switching circuits (TS), which consist of a demodulator, a data memory and a control unit, are connected in parallel with one another and parallel with the antenna circuit (A).

## Revendications

1. Transpondeur pour la transmission de données vers un appareil d'écriture/lecture, comprenant un circuit d'antenne (A), un redresseur de courant (G), un condensateur supplémentaire (PK) et des circuits de commutation (TS) de transpondeur, ainsi qu'un modulateur (MO), **caractérisé en ce que** le modulateur (MO) présente une résistance de modulateur (RM) et un interrupteur (S) commandé, monté en parallèle à celui-ci et génèrant une amplitude de modulation (ΔU_{T}) par une chute de tension dans le modulateur (MO) qui provoque une réduction du courant de transpondeur (I_{T}) circulant dans le transpondeur.

2. Transpondeur selon la revendication 1, **caractérisé en ce que** l'on prévoit un circuit de blocage et de protection (ZD) disposé entre le modulateur (MO) et le condensateur supplémentaire (PK).

3. Transpondeur selon la revendication 2, **caractérisé en ce que** le circuit de blocage et de protection (ZD), le condensateur supplémentaire (PK) et les circuits de commutation (TS) de transpondeur sont disposés en parallèle.

4. Transpondeur selon l'une quelconque des revendications précédentes, **caractérisé en ce que** le redresseur de courant (G) et le modulateur (MO) sont disposés en série l'un par rapport à l'autre et entre le circuit d'antenne (A) et les circuits de commutation (TS) de transpondeur, le redresseur de courant (G) étant disposé en amont ou en aval du modulateur (MO).

5. Transpondeur selon l'une quelconque des revendications précédentes, **caractérisé en ce que** le circuit d'antenne (A) comprend une bobine de transpondeur (L_{A}) et un condensateur (K_{A}) monté en parallèle.

6. Transpondeur selon l'une quelconque des revendications précédentes, **caractérisé en ce que** le circuit de blocage et de protection (ZD) comprend une diode Zener.

7. Transpondeur selon l'une quelconque des revendications précédentes, **caractérisé en ce que** les circuits de commutation (TS) de transpondeur consistant en un démodulateur, une mémoire de données et une unité de commande sont montés en parallèle et en parallèle au circuit d'antenne (A).
